(19) Europäisches Patentamt
European Patent Office
Office européen des brevets

(11) Veröffentlichungsnummer: **0 346 736 A2**

(12) # EUROPÄISCHE PATENTANMELDUNG

(21) Anmeldenummer: **89110213.9**

(51) Int. Cl.[4]: **C08G 65/00 , B01F 17/00**

(22) Anmeldetag: **06.06.89**

(30) Priorität: **11.06.88 DE 3820000**

(43) Veröffentlichungstag der Anmeldung: **20.12.89 Patentblatt 89/51**

(84) Benannte Vertragsstaaten: **CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Baur, Richard, Dr.**
**Nelkenstrasse 1**
**D-6704 Mutterstadt(DE)**
Erfinder: **Birnbach, Stefan, Dr.**
**Budapester Strasse 45**
**D-6700 Ludwigshafen(DE)**
Erfinder: **Oftring, Alfred, Dr.**
**Im Roehrich 49**
**D-6702 Bad Duerkheim(DE)**
Erfinder: **Winkler, Ekhard, Dr.**
**Pfalzring 74**
**D-6704 Mutterstadt(DE)**

(54) **Polyether.**

(57) Polyether I

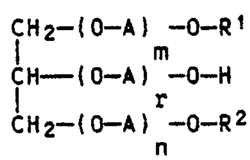

I

(A = $-CH_2-CH_2-$, 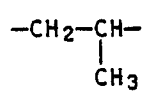 und/oder 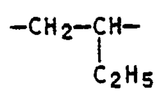 ,

$R^1$, $R^2$ = $C_1$- bis $C_{20}$-Alkyl,
n, m = Zahl von 1 bis 30, r = Zahl von 0 bis 20).
Die Polyether I dienen vornehmlich als Tenside in Wasch- und Reinigungsmittelzubereitungen.

EP 0 346 736 A2

## Polyether

Die vorliegende Erfindung betrifft neue Polyether der allgemeinen Formel I

$$\begin{array}{l} CH_2-(O-A)_m-O-R^1 \\ | \\ CH-(O-A)_r-O-H \\ | \\ CH_2-(O-A)_n-O-R^2 \end{array} \qquad I$$

in der die Variablen folgende Bedeutung haben:
A gleiche oder verschiedene Einheiten der Strukturen $-CH_2-CH_2-$,

$$-CH_2-\underset{CH_3}{\underset{|}{CH}}- \quad \text{oder} \quad -CH_2-\underset{C_2H_5}{\underset{|}{CH}}-$$

| | |
|---|---|
| $R^1$, $R^2$ | $C_1$- bis $C_{20}$-Alkylgruppen |
| n, m | 1 bis 30 |
| r | 0 bis 20 |

Außerdem betrifft die Erfindung die Herstellung der Polyether I sowie deren Verwendung als oberflächenaktive Mittel.

Verbindungen des Polyethertyps sind allgemein bekannt. Unter anderem gehören zu ihnen die technisch wichtigsten nichtionischen Tenside (siehe z.B. Ullmann, 4. Auflage, Band 22, S. 488 ff), innerhalb derer die Alkylphenyl-polyether von besonderer Bedeutung sind. Sie haben einerseits hervorragende anwendungstechnische Eigenschaften, weisen andererseits jedoch den Nachteil auf, daß sie sich häufig nur langsam vollständig biologisch abbauen lassen. Deshalb hat sich die chemische Industrie vorsorglich zu einem Verzicht der Alkylphenyl-polyether entschlossen.

Der vorliegenden Erfindung lag die Bereitstellung neuer Polyether mit vorteilhaften anwendungstechnischen Tensid-Eigenschaften, die unter anderem als Ersatz für Alkylphenyl-polyether geeignet sind, als Aufgabe zugrunde.

Demgemäß wurden die eingangs definierten Polyether I gefunden.

Weiterhin wurde gefunden, daß sich die Polyether I zusammen mit assoziativ-wirkenden Verdickern auf der Basis von Polyetherpolyolen besonders gut für die Herstellung von viskosen wäßrigen Reinigungsmitteln mit verminderter Ablaufneigung eignen, wie sie hauptsächlich in Fällen besonders hartnäckiger Verschmutzungen, zu deren Entfernung es einer gewissen Einwirkungszeit des Reinigers bedarf, angewendet werden.

Bisher wurden in diesem Bereich bevorzugt Gemische von Alkylphenyl-polyethern mit unterschiedlichem Polymerisationsgrad eingesetzt, die über ihre Funktion als grenzflächenaktive Substanz hinaus eine Zunahme der Zähigkeit des Reinigers bewirken.

An letztgenannter Eigenschaft mangelt es den als nichtionische Tenside weitverbreiteten Fettalkoholpolyethern, weshalb diese für den genannten Einsatzbereich nur kombiniert mit Verdickern als Alkylphenylpolyether-Ersatz geeignet sind.

Während in alkalischen Reinigern verschiedene Verdickungsprinzipien praktikabel sind, ist diese Vielfalt bei sauren Reinigern im wesentlichen auf assoziativ-wirkende Verdicker beschränkt, wie sie beispielsweise in der EP-A1-0061822, der WO 84/00361 oder der US 4 398 045 beschrieben sind.

Hierbei handelt es sich um alkoxylierte mehrwertige Alkohole, deren Polyetherketten endständig hydrophobe Substituenten tragen.

In wäßriger Lösung findet vermutlich eine Aneinanderlagerung zwischen von verschiedenen Molekülen stammenden hydrophoben Gruppen statt. Da pro Molekül mehr als eine hydrophobe Gruppierung vorhanden ist, entsteht ein weitmaschiges Netzwerk, auf dem die verdickende Wirkung wahrscheinlich beruht.

Bei Anwesenheit von herkömmlichen Fettalkoholpolyethern wird die verdickende Wirkung jedoch stark

reduziert. Herkömmliche Fettalkoholpolyether tragen pro Molekül nur eine hydrophobe Baugruppe, die bei assoziativer Wechselwirkung mit einem hydrophoben Ende eines Verdickermoleküls an dieser Stelle das Netzwerk unterbricht.

Eine sehr viel effektivere Verdickung ermöglichen die erfindungsgemäßen, zwei hydrophobe Enden tragenden Polyether I, da sie das Verdickernetz nicht unterbrechen, sondern nur auflockern können.

Bevorzugt sind solche Polyether I, in denen A für die ($-CH_2-CH_2$)-Gruppe und/oder $R^1$ und $R^2$ für $C_9$-$C_{15}$-Alkylgruppen stehen und/oder in denen die Reste $-(O-A)_m-O-R^1$ und $-(O-A)_n-O-R^2$ identisch sind.

Man erhält die erfindungsgemäßen Verbindungen I, indem man einen Polyether II

$H-(O-A)_n-O-R^1$ II

oder ein Gemisch verschiedener Polyether II ($n \neq m$; $R^1 \neq R^2$) in das zugehörige Alkalimetallsalz überführt und die daraus durch Reaktion mit Epichlorhydrin resultierenden Polyether III

$$\begin{array}{l} CH_2-(O-A)_m-O-R^1 \\ | \\ CH-OH \\ | \\ CH_2-(O-A)_n-O-R^2 \end{array} \qquad III$$

mit r mol Ethylenoxid, 1,2-Propylenoxid, 1,2-Butylenoxid oder einem Gemisch aus diesen Alkylenoxiden umsetzt.

Die Indices m, n und r geben hierbei jeweils den mittleren Oxalkylierungsgrad an, d.h. man erhält in der Regel ein Gemisch aus verschiedenen Verbindungen III bzw. I. Es ist aber auch möglich, wie es für Spezialzwecke erforderlich sein kann, nach üblichen Techniken einheitliche Verbindungen III bzw. I herzustellen.

Das Alkalimetallsalz ist vorteilhaft durch Neutralisation mit einer wäßrigen Hydroxidlösung erhältlich und bei der Umsetzung mit Epichlorhydrin werden bevorzugt pro Mol Epichlorhydrin 2 mol Salz eingesetzt, wobei die Reaktionstemperatur auf 20 bis 80 °C, vorzugsweise 30 bis 40 °C, gehalten wird. Die anschließende Alkoxylierung wird mit Vorteil in Gegenwart eines basischen Katalysators durchgeführt, z.B. mittels 0,1 bis 0,5 Gew.% KOH, bezogen auf die eingesetzte Menge der Verbindung III. Im übrigen gehört die Alkoxylierung eines Alkohols zu den Standardoperationen der präparativen Chemie, so daß nähere Erläuterungen hierzu entbehrlich sind.

Die neuen Verbindungen I und deren Mischungen haben als nichtionische grenzflächenaktive Stoffe in allen industriellen Bereichen Bedeutung, in denen Tenside unverzichtbare Hilfsmittel sind. So eignen sie sich als oberflächenaktive Mittel in Wasch- und Reinigungsmitteln, für die Herstellung von Emulsionen, Pigment- und Kunststoffdispersionen sowie für die Bereitung von Wirkstoffzubereitungen aus hydrophilen und hydrophoben Komponenten.

Ihr Einsatzschwerpunkt liegt bei Wasch- und Reinigungsmitteln. Entsprechenden Zubereitungen werden die erfindungsgemäßen Substanzen vorzugsweise in Mengen von 1 bis 50, insbesondere 5 bis 45 Gew.% zugesetzt. Als weitere Komponenten können zusätzlich anionische Tenside wie $C_8$-$C_{12}$-Alkylbenzolsulfonate, $C_{12}$-$C_{16}$-Alkylsulfate oder $C_{12}$-$C_{16}$-Alkansulfonate, Stoffe zur Unterstützung der grenzflächenaktiven Substanzen und zum Enthärten des Wassers wie Natriumtriphosphat, Zeolithe, Natriumcarbonat, Polycarbonsäuren, Nitrilotriessigsäure, Citronensäure und monomere-oligomere-polymere Phosphonate, Bleichmittel, Korrosionsinhibitoren, Vergrauungsinhibitoren, schaumhemmende Stoffe, schmutzbindende Stoffe und gegebenenfalls weitere übliche Hilfsstoffe enthalten sein.

Besonders vorteilhaft können die erfindungsgemäßen Polyether I gemeinsam mit assoziativ-wirkenden Verdickern auf der Basis von Polyetherpolyolen zur Herstellung von viskosen wäßrigen Reinigungsmitteln eingesetzt werden.

Bevorzugt werden sie mit assoziativ wirkenden Verdickern kombiniert, die durch Alkoxylierung von mehrwertigen Alkoholen mit 2 bis 10 C-Atomen und 2 bis 6 Hydroxylgruppen mit Ethylenoxid und/oder weiteren Alkylenoxiden mit 3 oder 4 C-Atomen und anschließender Hydrophobierung der endständigen Hydroxyl-Gruppen der als Zwischenstufe anfallenden Polyether durch Umsetzung mit 1,2-Alkylenoxiden, Alkylglycidylethern und/oder Alkenylglycidylethern mit 8 bis 30 C-Atomen erhalten werden können. Das Molekulargewicht dieser Verdickungsmittel liegt im allgemeinen im Bereich von 1000 bis 75000, wobei der Anteil der hydrophoben Gruppen etwa 0,5 bis 75 Gew.% beträgt. Besonders bewährt haben sich Verdicker, bei denen die Hydrophobierung der endständigen Hydroxyl-Gruppen einen Alkoxylierungsgrad zwischen 0,5 und 5 pro (-OH)-Gruppe aufweist.

Geeignete polyfunktionelle Alkohole, die diesen Verdickungsmitteln zugrundeliegen, sind insbesondere

Alkanpolyole wie 1,2-Ethandiol, 1,2-Propandiol, 1,2-Butandiol, 1,3-Butandiol, 1,4-Butandiol, Trimethylolpropan, Pentaerythrit, Glycerin, 2,3,4,5-Hexantetrol und Glucose, Alkenpolyole wie 2-Buten-1,4-diol, 2-Hexen-1,4,6-triol, 1,5-Hexadien-3,4-diol und 3-Hepten-1,2,6,7-tetrol oder Alkinpolyole wie 2-Butin-1,4-diol, 2-Hexin-1,4,6-triol und 4-Octin-1,2,7,8-tetrol.

Zur Grundalkoxylierung der Polyole eignen sich neben Ethylenoxid vor allem Propylenoxid, 1,2-Butylenoxid, 2,3-Butylenoxid, 1,3-Butylenoxid und Tetrahydrofuran. Bevorzugt werden Gemische verwendet, die Ethylenoxid und Propylenoxid in einem Gewichtsverhältnis von 70:30 bis 95:5 enthalten.

Als langkettige 1,2-Alkylenoxide kommen beispielsweise 1,2-Epoxyoctan, 1,2-Epoxydodecan, 1,2-Epoxyhexadecan und 1,2-Epoxyoctacosan in Betracht.

Beispiele für Alkylglycidylether mit langkettiger Alkylgruppe sind Dodecyl-, Tetradecyl-, Hexadecyl-, Octadecyl-, Eicosyl-, 2-Methyldodecyl-, 2-Methyltetradecyl-, 2-Methylpentadecyl-, 2-Hexyldecyl- und 2-Octyldodecylglycidylether. Beispiele für Alkenylglycidylether sind Oleylglycidylether oder Undecylarylglycidylether. Die Herstellung solcher Alkyl- bzw. Alkylenglycidylether ist in der US 4 086 279 oeschrieben.

Von besonderem Interesse sind saure Reiniger, die

| | |
|---|---|
| 5 bis 25 Gew.% | Polyether I |
| 5 bis 50 Gew.% | wasserlösliche Säure |
| 1 bis 10 Gew.% | assoziativ-wirkenden Verdicker auf Polyetherpolyol-Basis |
| 0 bis 5 Gew.% | übliche Hilfsmittel und |

als Restmenge Wasser enthalten.

Saure Reiniger werden vor allem zur Entfernung von basischen Niederschlägen eingesetzt. Bevorzugte Säuren sind Salzsäure, Phosphorsäure sowie Phosphorsäureester, Schwefelsäure, Oxalsäure, Citronensäure, Ameisensäure, Amidosulfonsäure, Adipinsäure, Glutarsäure und Bernsteinsäure.

Eine weitere wertvolle Eigenschaft der erfindungsgemäßen Polyether I ist ihr relativ geringes Schäumvermögen, was insbesondere bei alkalischen Reinigungsverfahren mit starker mechanischer Beanspruchung von Vorteil ist.

Vermutlich eng verknüpft mit diesem relativ geringen Eigenschäumvermögen ist die Fähigkeit der Polyether I, das Schäumvermögen anderer Wirkstoffe in wäßriger Lösung zu dämpfen. Dies ist dann von Vorteil, wenn aufgrund verschiedener anwendungstechnisch vorteilhafter Eigenschaften die Anwesenheit dieser Wirkstoffe einerseits erwünscht ist, ihr Schäumvermögen andererseits von Nachteil wäre.

Besonders ausgeprägt schaumdämpfend wirken Polyether I, in denen der Rest

$-(O-A)_r-O-H$

einen geringen Alkoxylierungsgrad aufweist. Insbesondere Polyether I mit $r = 0$ sind hinsichtlich ihres Schäumdämpfungsvermögens anwendungstechnisch bevorzugt.

Ein häufig auftretendes Problem bei Tensid/Wasser-Gemischen ist, daß oberhalb einer bestimmten Temperatur Entmischung auftritt, wodurch die Reinigungswirkung vermindert wird. Diese Grenztemperatur wird als "Trübungstemperatur" bezeichnet. Sie ist abhängig von der Konzentration des Tensids und wird zu dessen Charakterisierung üblicherweise nach DIN 53917 für ein Tensid/Wasser-Gemisch mit einem Tensidgehalt von 1 Gew.% bestimmt. Als Tenside mit relativ hohen Trübungstemperaturen sind die erfindungsgemäßen Polyether I mit $r \neq 0$ bevorzugt.

Beispiele 1 bis 7

Beispiel 1

Ein Tridecanol-Isomerengemisch wurde in üblicher Weise mit Ethylenoxid zu einem Ethoxylierungsprodukt des Ethoxylierungsgrades von $n = 8$ umgesetzt. 1,4 kg (= 2,42 mol OH) dieses Produktes wurden sodann zunächst bei Raumtemperatur mit 0,21 kg 50 gew.%iger Natronlauge und danach bei 50 bis 60 °C mit 116 g (1,26 mol) Epichlorhydrin umgesetzt.

Aus dieser Mischung wurden die anorganischen Bestandteile (NaCl, NaOH) mit Wasser extrahiert, wonach das Restwasser unter vermindertem Druck destillativ entfernt wurde. Das Produkt (rd. 1,4 kg), welches zur Entfernung restlicher Salzmengen filtriert wurde, fiel in Form einer klaren viskosen Flüssigkeit an und entsprach der Formel

$CH_2-(O-CH_2-CH_2)_8-O-C_{13}\text{-alkyl}$
|
$CH-OH$
|
$CH_2-(O-CH_2-CH_2)_8-O-C_{13}\text{-alkyl}.$

511 g dieses Produktes (= 0,511 mol OH) wurden zusammen mit 0,9 g Kaliumhydroxid bei 110 bis 115 °C und einem Druck von 6 bar im Laufe von 8 h mit 112 g (2,55 mol) Ethlyenoxid versetzt, wonach das Reaktionsgemisch noch 3 h bei 110 bis 115 °C gehalten wurde.

Das Reaktionsprodukt (rd. 620 g) entsprach der Formel

$CH_2-(O-CH_2-CH_2)_8-O-C_{13}\text{-alkyl}$
|
$CH-(O-CH_2-CH_2)_5-OH$
|
$CH_2-(O-CH_2-CH_2)_8-O-C_{13}\text{-alkyl}.$

In analoger Weise wurden die Beispiele 2 bis 7 der erfindungsgemäßen Tenside hergestellt, die in Tabelle 1 aufgeführt sind.

Tabelle 1 gibt als wesentliche Eigenschaften ihre Trübungstemperatur (nach DIN 53917), ihr Schäumvermögen (nach DIN 53902 bei 25 ± 2 °C mit 2 g Tensid/l Wasser und Wasser der Härte 10 °dH gemäß DIN 53910, Blatt 1), ihr Netzvermögen (nach DIN 53901 mit 2 g Tensid/l Wasser bei 20 ± 2 °C) und ihre Fähigkeit zur Oberflächenentspannung (nach DIN 53914 mit 0,1 g Tensid/l Wasser bei 20 ± 2 °C) wieder. Zum Vergleich (Beispiele I bis IV) wurden die herkömmlichen Fettalkoholpolyether in der Tabelle aufgenommen, die im vorliegenden Fall mit Epichlorhydrin umgesetzt wurden.

Tabelle 1

| Beispiel | $R^1$, $R^2$ | n | r | Trübungstemperatur [°C] | Schäumvermögen [$cm^3$] | Netzvermögen [sec] | Oberflächenspannung [mN/m] |
|---|---|---|---|---|---|---|---|
| 1 | $C_{13}$-Alkyl | 8 | 5 | 38 | 170 | 15 | 31,7 |
| 2 | $C_{13}$-Alkyl | 8 | 10 | 48 | 210 | 48 | 35,0 |
| 3 | $C_{13}$-Alkyl | 8 | 0 | <25 | 50 | 96 | 30,8 |
| I | $C_{13}$-Alkyl | 8 | - | 60 | 500 | 30 | 30,6 |
| 4 | $C_{13}$-Alkyl | 5 | 15 | 56 | 280 | 57 | 32,7 |
| 5 | $C_{13}$-Alkyl | 5 | 0 | <25 | 20 | 41 | 33,5 |
| II | $C_{13}$-Alkyl | 5 | - | <25 | 60 | 50 | 31,8 |
| 6 | $C_{10}$-Alkyl | 5 | 5 | 43 | 30 | 7 | 30,9 |
| 7 | $C_{10}$-Alkyl | 5 | 10 | 63 | 300 | 15 | 31,2 |
| III | $C_{10}$-Alkyl | 5 | - | 30 | 400 | 20 | 30,5 |
| 8 | $C_{10}$-Alkyl | 7 | 10 | 61 | 120 | 18 | 32,1 |
| 9 | $C_{10}$-Alkyl | 7 | 15 | 75 | 240 | 29 | 32,1 |
| 10 | $C_{10}$-Alkyl | 7 | 0 | <25 | 30 | 49 | 27,3 |
| IV | $C_{10}$-Alkyl | 7 | - | 60 | 530 | 25 | 30,0 |

Beispiel 8

Vergleich der Zähigkeit verschiedener saurer Reinigerformulierungen

Mit den Tensiden gemäß den Beispielen 1 bis 10 sowie I bis IV wurden saure Reiniger A folgender Zusammensetzung hergestellt:

| | |
|---|---|
| 65 Gew.% | Wasser |
| 20 Gew.% | Phosphorsäure |
| 10 Gew.% | Tensid |
| 5 Gew.% | Verdicker. |

Zum Vergleich dienen Formulierungen B ohne Verdicker, bestehend aus

| | |
|---|---|
| 65 Gew.% | Wasser |
| 20 Gew.% | Phosphorsäure |
| 10 Gew.% | Tensid |

sowie eine Formulierung C ohne Tensid mit

| | |
|---|---|
| 75 Gew.% | Wasser |
| 20 Gew.% | Phosphorsäure und |
| 5 Gew.% | Verdicker. |

Bei den Reinigern B wurde eine Alkylphenyl-polyether Mischung aus

| | |
|---|---|
| 50 Gew.% | ethoxyliertem Nonylphenol mit n = 7 und |
| 50 Gew.% | ethoxyliertem Nonylphenol mit n = 9 |

als zusätzliches Vergleichstensid V miteinbezogen.

Als assoziativ wirkender Verdicker wurde ein Polyetherpolyolgemisch mit einem mittleren Molekulargewicht von ca. 17000 (berechnet aus der Einwaage der Ausgangskomponenten) eingesetzt, das durch Alkoxylierung von 2,2-Bis(hydroxymethyl)-butan-1-ol mit einem Gemisch, bestehend aus 80 Gew.% Ethylenoxid und 20 Gew.% Propylenoxid, bei einem mittleren Alkoxylierungsgrad von 120 pro OH-Gruppe, und anschließender Hydrophobierung mit einer Mischung von 15 bis 18 C-Atomen enthaltenden 1,2-Alkylenoxiden, bei einem mittleren Alkoxylierungsgrad von 1 pro OH-Gruppe, erhalten wurde.

Die dynamischen Viskositäten dieser Reinigerformulierungen wurden mit einem Rotationsviskosimeter vom Typ "Searle" bei 20°C und einem Geschwindigkeitsgefälle von 150 $s^{-1}$ bestimmt. Die Ergebnisse sind in Tabelle 2 zusammengestellt.

Tabelle 2

| Tensid gemäß Beispiel | - | I | 1 | 2 | 3 | II | 4 | 5 | III | 6 | 7 | IV | 8 | 9 | 10 | V |
|---|---|---|---|---|---|---|---|---|---|---|---|---|---|---|---|---|
| Viskosität [mPa•s] Formulierungstyp A, C | ca. 7000 | 1079 | 2065 | 1630 | 2430 | 1448 | 2742 | 1870 | 160 | 220 | 283 | 106 | 283 | 472 | 543 | - |
| Viskosität [mPa•s] Formulierungstyp B | - | 49 | 151 | 50 | 180 | 121 | 19 | 143 | 21 | 14 | 7 | 14 | 16 | 14 | 71 | 480 |

Beispiel 9

Untersuchung der schaumdämpfenden Wirkung verschiedener Tenside

Diese Untersuchungen wurden nach einem der DIN 53902 (Bestimmung des Schäumvermögens von Tensiden) entsprechenden Verfahren bei 25 ± 2 °C und mit Wasser der Härte 10° dH gemäß DIN 53910, Blatt 1 durchgeführt.

Dabei wurde einerseits das Schäumvermögen wäßriger Lösungen, die pro l Wasser 0,15 g eines stark schäumenden Tensids und zusätzlich 0,15 g des hinsichtlich seiner schaumdämpfenden Wirkung zu prüfenden Tensids enthielten und andererseits das Schäumvermögen einer wäßrigen Lösung, die pro 1 Wasser nur 0,15 g des stark schäumenden Tensids enthielt, bestimmt.

Als Tensid mit ausgeprägtem Schäumvermögen wurde das Natriumsalz der n-Dodecylbenzolsulfonsäure (Beispiel VI) eingesetzt. Die erhaltenen Ergebnisse weist die Tabelle 3 aus.

Tabelle 3

| Tensid gemäß Beispiel | Schaumvolumen [$cm^3$] |
|---|---|
| VI | 390 |
| VI + 3 | 60 |
| VI + 5 | 70 |
| VI + 10 | 110 |
| VI + IV | 440 |

## Ansprüche

1. Polyether der allgemeinen Formel I

$$\begin{array}{l} CH_2-(O-A)_m-O-R^1 \\ | \\ CH-(O-A)_r-O-H \\ | \\ CH_2-(O-A)_n-O-R^2 \end{array} \qquad I$$

in der die Variablen folgende Bedeutung haben:
A gleiche oder verschiedene Einheiten der Strukturen $-CH_2-CH_2-$,

$$-CH_2-CH(CH_3)- \quad \text{oder} \quad -CH_2-CH(C_2H_5)-$$

| | |
|---|---|
| $R^1$, $R^2$ | $C_1$- bis $C_{20}$-Alkylgruppen |
| n, m | 1 bis 30 |
| r | 0 bis 20. |

2. Polyether nach Anspruch 1, in denen A für eine ($-CH_2-CH_2-$)-Gruppe steht.

3. Polyether nach den Ansprüchen 1 oder 2, in denen $R^1$ und $R^2$ jeweils für eine $C_9$- bis $C_{15}$-Alkylgruppe stehen.

4. Polyether nach den Ansprüchen 1 bis 3, in denen die Reste $-(O-A)_m-O-R^1$ und $-(O-A)_n-O-R^2$ identisch sind.

5. Verfahren zur Herstellung der Polyether I gemäß den Ansprüchen 1 bis 4, dadurch gekennzeichnet, daß man einen Polyether II

$H\text{-}(O\text{-}A)_n\text{-}O\text{-}R^1$ II

oder ein Gemisch verschiedener Polyether II in das zugehörige Alkalimetallsalz überführt und die daraus durch Reaktion mit Epichlorhydrin resultierenden Polyether III

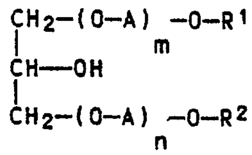

III

mit r mol Ethylenoxid, 1,2-Propylenoxid, 1,2-Butylenoxid oder einem Gemisch aus diesen Alkylenoxiden umsetzt.

6. Zubereitungen für Wasch- und Reinigungszwecke, enthaltend als grenzflächenaktive Komponente 1 bis 50 Gew.% eines Polyethers I gemäß den Ansprüchen 1 bis 4.

7. Zubereitungen für Reinigungszwecke nach Anspruch 6, enthaltend

| | |
|---|---|
| 5 bis 25 Gew.% | eines Polyethers gemäß den Ansprüchen 1 bis 4 |
| 5 bis 50 Gew.% | einer wasserlöslichen Säure |
| 1 bis 10 Gew.% | eines assoziativ-wirkenden Verdickers auf Basis von Polyetherpolyolen |
| 0 bis 5 Gew.% | übliche Hilfsmittel und |

als Restmenge Wasser.

8. Verwendung der Polyether I gemäß den Ansprüchen 1 bis 4 als oberflächenaktive Mittel in Wasch- und Reinigungsmitteln, für die Herstellung von Emulsionen, Pigment- und Kunststoffdispersionen sowie für Wirkstoffzubereitungen aus hydrophilen und hydrophoben Komponenten.

9. Verwendung der Polyether I gemäß den Ansprüchen 1 bis 4 als schaumdämpfende Mittel.